# EUROPEAN PATENT SPECIFICATION

(11) **EP 2 257 031 B1**
(45) Date of publication and mention of the grant of the patent: **26.06.2013**
(21) Application number: 09161156.6
(22) Date of filing: 26.05.2009
(51) Int. Cl.: H04M 1/02

(54) **Slide flip mechanism and configuration for a mobile device**
Gleit-Klappmechanismus und Konfiguration für eine mobile Vorrichtung
Mécanisme de bascule latérale et configuration pour un dispositif mobile

(43) Date of publication of application: 01.12.2010
(73) Proprietor: Research In Motion Limited, Waterloo, ON N2L 3W8 (CA)
(72) Inventor: Leung, Kwok Ching, Waterloo Ontario N2L 3W8 (CA); Wun, Archer Chi Kwong, Waterloo Ontario N2L 3W8 (CA); Griffin, Jason Tyler, Waterloo Ontario N2L 3W8 (CA)
(74) Representative: Moore, Barry

(56) References cited:
- EP-A1- 1 533 984
- EP-A1- 1 538 814
- GB-A- 2 434 274
- US-A1- 2006 135 227
- US-A1- 2007 076 861

## Description

The present application relates generally to mobile devices, and more particularly to a slider flip mechanism and configuration for a mobile communication device.

The functionality associated with mobile communication devices continues to increase and the convergence of voice and data functions is becoming the norm. Mobile communication devices are typically equipped to provide voice, email, text messaging and web browsing functions. In addition, mobile communication devices are also available that include MP3 capabilities, a digital camera and/or integrated GPS functionality. With the increased functionality and features being put into mobile communication devices, there comes the need for expanded user controls for data entry and navigation. As a result, mobile communication devices are typically configured with a keypad for entering telephone numbers and/or text and alphanumeric characters, function keys/buttons and navigation tools, such as, menu keys, a trackball, scroll wheel and the like.

In order to be useful, the functionality and controls associated with the mobile communication device must be easily accessible by a user and the ergonomics of the mobile communication device become an important consideration for a user in order to handle the increasing functionality and feature set.

Accordingly, there remains a need for improvements in the art.

EP1538814 discloses a sliding/folding-type portable digital communication apparatus having a first housing; a sliding/hinge housing positioned on a bottom surface of the first housing and adapted to perform a sliding movement along a longitudinal direction of the first housing; and a rotational housing rotatably coupled to the sliding/hinge housing in such a manner that its top surface or bottom surface can selectively face the bottom surface of the first housing according to whether or not it has been rotated.
Another sliding/folding-type mobile device is disclosed in US 2007/0076861.

### GENERAL

The present disclosure is directed generally to a mobile communication device or handheld device with a slider flip mechanism and configuration.

According to one embodiment, the present disclosure may comprise a mobile device comprising: a first component; a second component; and a slider flip mechanism, the slider flip mechanism comprising a slide member and the slide member having a surface for carrying a third component; wherein said first component is configured with a recess defining a channel to receive said slide member; wherein the slider flip mechanism is configured to operatively couple the first component to the second component; and wherein the slider flip mechanism is configured to slide the slide member in said channel and move the second component relative to the first component from a slide-in position to a slide-out position; wherein in said slide-in position said surface is not exposed and wherein the slider flip mechanism is configured for flipping the second component relative to the first component from a flipped-closed position to a flipped-open position in the slide-in position or in the slide-out position.

>

### BRIEF DESCRIPTION OF THE DRAWINGS

Reference will now be made to the accompanying drawings which show, by way of example, embodiments according to the present disclosure, and in which:

Fig. 1 is a perspective view of a mobile communication device with a slider flip mechanism in a closed position according to an embodiment;

Fig. 2 is a further perspective view of the mobile communication device of Fig. 1 in a slide-out position;

Fig. 3 is a further perspective view of the mobile communication device of Fig. 1 in a slide-out and flipped open position;

Fig. 4 is a further perspective view of the mobile communication device of Fig. 1 in a flipped open position;

Fig. 5 is a perspective view of a slide and a C-channel receiving profile according to an embodiment; and

Fig. 6 is a sectional view of the slide and C-channel receiving profile shown in Fig. 5 and taken along line 5-5.

Like reference numerals indicate like or corresponding elements in the drawings.

### DESCRIPTION OF PREFERRED EMBODIMENTS

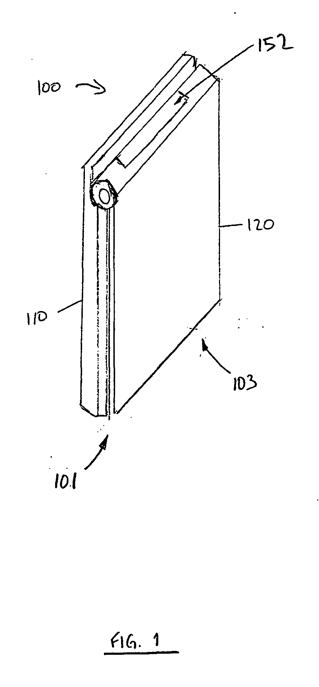

Reference is first made to Fig. 1, which shows a mobile device according to an embodiment and indicated generally by reference 100. According to an embodiment, the mobile device 100 comprises a mobile communication device such as a BlackBerry™ handheld device or a cellular phone or communication device or other type of handheld device.

According to an embodiment shown in Fig. 1, the mobile device 100 comprises a first member or base or base component 110 and a second member or cover or cover component 120. Although other configurations may be suitable, the cover 120 has a shape similar to the shape of the base 110.

Referring now to Figs. 1-4, the base 110 includes a keypad or keyboard 112, and the cover 120 includes a display module 122 provided on an inner surface of the cover 120 and visible when the device 100 is in a flipped-open configuration. According to an embodiment, the keypad 112 comprises a dual-function style keyboard with a telephone dial pad (i.e. for numeric entry) and a QWERTY style keyboard for entering alphanumeric characters, e.g. for text messaging or email applications, and it will be appreciated that other keyboards may be appropriate, such as a reduced QWERTY, AZERTY or QWERTZ keyboard, among others. It is contemplated that the keyboard 112 could be a physical keyboard with depressible keys, or a touch screen keyboard, as known in the art.

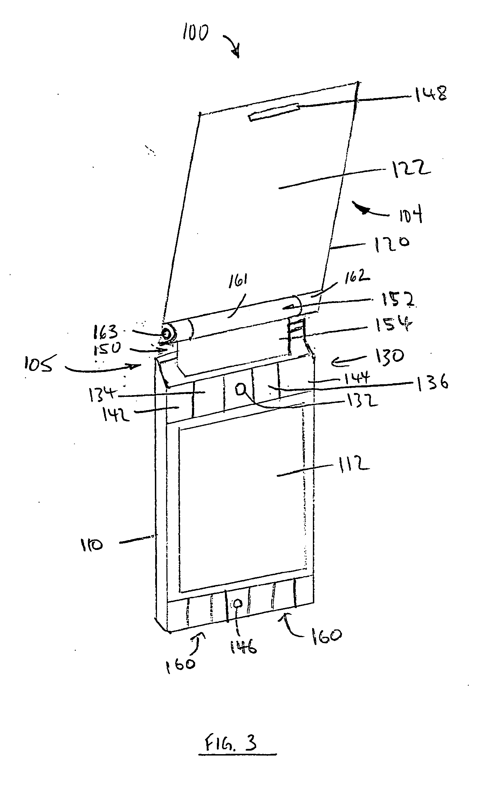

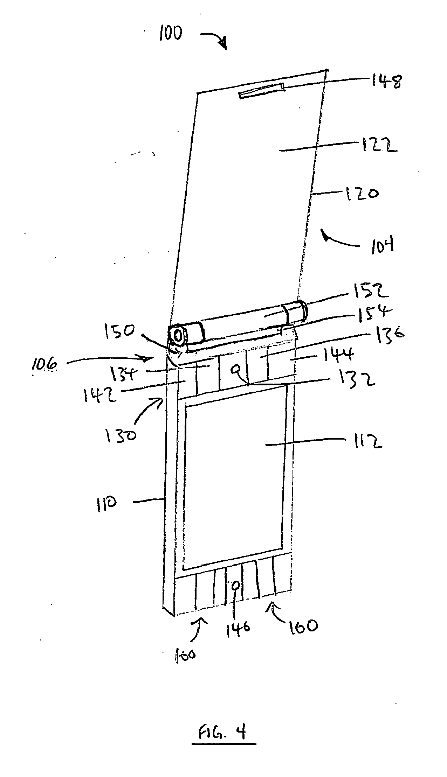

According to an embodiment, the base 110 further includes navigation tools or controls and/or telephony keys or controls, for example as shown in Fig. 3, and indicated generally by reference 130. Alternatively, the telephony keys and/or navigation controls 130 may be situated or configured (not shown) with the cover 120. The navigation controls include a trackball 132 (or other type of pointing device or mechanism), a menu key 134 and an escape or return key 136, for example as depicted in Figs. 3 and 4. The telephony keys or controls include a send or call key 142 and an end call key 144, for example as depicted in Figs. 3 and 4. It will be appreciated that other key, button or control configurations are possible according to other embodiments or other implementations.

Still referring to Figs. 3 and 4, the base 110 includes a microphone or similar transducer component 146, and the cover 120 includes a receiver (e.g. speaker) or similar transducer component 148. The mobile device 100 further includes function keys indicated generally by reference 160 on a lower portion of the base 110. According to an embodiment, the functionality or features associated with the function keys 160 are user programmable, although it will be appreciated that the functions of the function keys 160 may be pre-selected for the user by, for example, the device manufacturer or the user's wireless service provider.

According to an embodiment, the mobile device 100 is implemented with voice and data communication functionality. The mobile device 100 comprises a central processing unit or CPU (not shown) that operates under the control of a program (i.e. stored program control) and executes code or instructions, in the form of firmware or software, stored in program memory. The CPU is also provided with data memory. In known manner, the CPU is also operatively coupled to the keyboard 112, the display module 122 and the trackball 132, and an audio transducer or speaker 148. In addition to the program executable code provided for performing the functions associated with the operation of the mobile device 100, the program memory includes other programs or applications, for example, a browser program. The browser program allows a user to access web pages on the Internet using the mobile device 100, e.g. utilizing a graphical user interface, comprising, for example, the keyboard 112 and the display module 122 and/or the trackball 132. The mobile device 100 includes a RF, demodulation/modulation and decoding/coding circuits (not shown), and a suitable RF antenna (not shown). The RF demodulator/modulator and decoder/coder circuits and the RF antenna are operatively coupled to the CPU and provide an interface for wireless communication with the wireless network. The particular implementation details of the voice and data functions and RF circuits will be within the understanding of those skilled in the art, and are therefore not described in further detail.

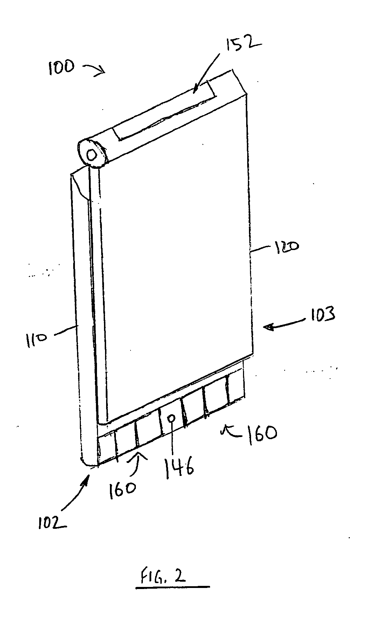

Referring to Figs. 3 and 4, the cover 120 is operatively coupled to the base 110 via a slider flip mechanism indicated generally by reference 150. According to an embodiment, the slider flip mechanism 150 is configured to allow the cover 120 to slide with respect to the base 110 between a slide-in position indicated generally by reference 101 in Fig. 1 and a slide-out position indicated generally by reference 102 in Fig. 2 (and reference 105 in Fig. 3). The slider flip mechanism 150 is also configured to allow the cover 120 to flip with respect to the base 110 between a flipped-closed position indicated generally by reference 103 in Fig. 1 and a flipped-open position indicated generally by reference 104 in Fig. 4. In addition, the slider flip mechanism 150 is configured to allow the cover 120 to flip with respect to the base 110 when the base 110 is in the slide-out position 102 (Fig. 2) between the flipped-closed position 103 indicated in Fig. 2 and the flipped-open position 104 (Fig. 3). Further, the slider flip mechanism 150 is also configured to allow the cover 120 to be manipulated in the flipped-open 104 and the slide-out 105 positions shown in Fig. 3 and slid into a slide-in position indicated generally by reference 106 as shown in Fig. 4. In other words, the user can easily maneuver the device 100 into various positions or configurations to suit the application, as will be described in further detail below. For example, the present slider flip mechanism 150 does not require the user to place the device 100 in the slide-in position 106 prior to moving the cover into the flipped-closed position 103. Rather, the user can move the cover 120 from the flipped-open position 104 to the flipped-closed position 103 from either the slide-in or slide-out positions 106, 105, respectively.

According to an embodiment, when the mobile device 100 is in the flipped-open position 104 shown in Figs. 3 and 4, the display screen 122 is activated. Alternatively, when the mobile device 100 is in the flipped-closed position 103 shown in Figs. 1 and 2, the display screen 122 is turned off or operated in a "sleep mode", as will be familiar to one skilled in the art. It is contemplated that such a configuration will conserve the battery life of the device.

To enable the above-described manipulation of the device 100, the slider flip mechanism 150 comprises a hinge 152 and a slide member or slide 154. The hinge 152 is configured to engage an end of the cover 120 and allows the cover to rotate approximately 180 degrees, or another suitable angle, as desired, relative to the base 110. The hinge 152 comprises a hinge member or component 161 connected to the slide member 154 and a mating or matching hinge member or component 162 connected to the cover 120. According to an embodiment, the hinge members 161 and 162 are coupled together to form the hinge 152 (for example, using a hinge pin 163 or other similar component).

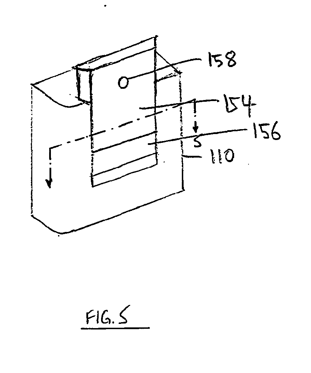

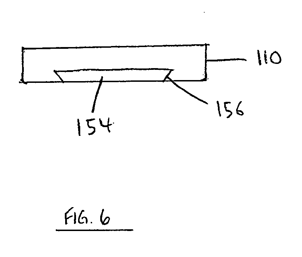

Turning now to Figs. 5 and 6, the slide member 154 is configured for being received in a channel or recess 156 configured in the base 110. According to an embodiment, the recess 156 comprises a C-channel configuration, which is defined in the base 110. The slide 154 is further configured to allow the cover 120 and/or the base 110 to move linearly with respect to each other from the slide-in position 101, 106 in Figs. 1 and 4, respectively, to the slide-out position 102, 105 in Figs. 2 and 3, respectively, and vice versa. According to an embodiment, the slide 154 can be configured to include a camera component 158 (Fig. 5), for example, comprising a camera lens or a camera. When the slide member 154 is in the slide-in position 101 or 106, i.e. not extended, the camera component 158 is not exposed and protected. When the user manipulates the device to the slide-out position 102 or 105, the camera component 158 is exposed and can be operated by the user. According to another aspect, the camera component 158 is configured to be turned off or deactivated in the slide-in position 101 or 106 and turned on or active in the slide-out position 102 or 105. It will be appreciated that other slide or guiding mechanisms may be utilized and the particular implementation details will be within the knowledge of one skilled in the art. It is further appreciated that the present device 100 is not limited to providing a camera component 158 on the slide member 154 and that alternative components may be provided on the slide member 154, such as additional keys, navigational components, or the like.

According to one aspect, when the mobile device 100 is flipped closed and slid in (Fig. 1), the user is prevented from inadvertently hitting keys or buttons, which may, for example, initiate dialing of a phone call. According to another aspect, the user of the mobile device 100 may access function keys 160 on the lower portion of the base 110 when the mobile device 100 is flipped closed by sliding the cover 120 relative to the base 110 (i.e. into the slide-out position 102 depicted in Fig. 2) through the use of the slider flip mechanism 150. This can allow the user to access the function keys 160 when the mobile device 100 is in the user's pocket (i.e., if the device 100 is placed into the user's pocket with the hinge 150 facing away from them and the lower portion of the base 110 facing towards them), since the mobile device 100 need not be flipped open to access the function keys 160. Such a configuration also allows the user to access the function keys 160 at any time an application using those keys is desired, such as for playing media, for example, without the need to first flip open the device.

While not shown in the drawings, it is also contemplated that the device 100 could have an outer display screen provided on an outer surface of the cover 120, providing a secondary display to the user. Such an outer display screen could indicate the time, number of new messages, battery strength and signal strength, among others, to the user, without the need for the user to flip open the cover 120 relative to the base 110. Further, when the user manipulates the cover 120 into the slide-out position 102 (Fig. 2), the user can access the function keys 160 to operate the outer display screen. For example, the user could use the function keys to scroll through new messages or missed calls, to change the volume, or to change the time on the device, among other things.

While the slider flip mechanism and configuration has been described in the context of a mobile communication device, it will be appreciated that the configuration is suitable for other types of handheld devices or portable communication or data devices.

The presently discussed embodiments are considered to be illustrative and not restrictive, the scope of the disclosure being indicated by the appended claims.

## Claims

1. A mobile device (100) comprising:
a first component (110);
a second component (120); and
a slider flip mechanism (150) the slider flip mechanism comprising a slide member and the slide member having a surface for carrying a third component;
wherein said first component (110) is configured with a recess (156) defining a channel to receive said slide member (154) in a C-channel configuration,
wherein said slider flip mechanism (150) is configured to operatively couple said first component (110) to said second component (120);
wherein said slider flip mechanism (150) is configured to slide the slide member in said channel (156) and move said second component (120) relative to said first component (110) from a slide-in position (101) to a slide-out position (102);
wherein in said slide-in position said surface is not exposed; and
wherein in said slide-in position said slider flip mechanism is substantially inserted into said recess; and
wherein said slider flip mechanism (150) is configured to flip said second component (120) relative to said first component (110) from a flipped-closed position (103) to a flipped-open position (104) in said slide-in position (101) or in said slide-out position (102).

2. The mobile device (100) of claim 1, wherein said first component (110) is configured with a plurality of keys (160), and one or more of said plurality of keys (160) are accessible in said slide-out position (102) and comprise one or more control keys for operating the mobile device.

3. The mobile device (100) of claim 1 or claim 2 wherein said second component (120) comprises a display (122) and said display (122) is viewable in said flipped-open position (104).

4. The mobile device (100) of claim 3, wherein said display (122) is configured to be operable when said slider flip mechanism (150) is in said flipped-open position (104).

5. The mobile device (100) of any proceeding claim, wherein said slider flip mechanism (150) comprises a hinge (152) and a slide member (154) operatively coupled to said hinge (152).

6. The mobile device (100) of claim 5, wherein said hinge (152) comprises a hinge member (161) connected to said second component (120) and another hinge member (162) connected to one end of said slide member (154), and a hinge pin (163) operatively coupling said hinge members (161, 162) together.

7. The mobile device (100) of any one of claims 5 to 6, wherein said hinge (152) engages the second component (120).

8. The mobile device (100) of any preceding claim, wherein said slide member (154) comprises an electronic component (158) comprising a camera component, or a navigational component or additional keys.

9. The mobile device (100) of claim 8, wherein the electronic component (158) comprises a camera component and said camera component (158) is in a covered state when said slider flip mechanism (150) is in said slide-in position (101).

10. The mobile device (100) of claim 9, wherein said camera component (158) is operable when said slider flip mechanism (150) is in said slide-out (102) and said flipped-open (104) positions.

11. The mobile device (100) of claim 8, wherein in said slide-in position, said slider flip mechanism is substantially contained in said recess so that said electronic component is protected from exposure.

## Patentansprüche

1. Mobilvorrichtung (100) mit:
einer ersten Komponente (110),
einer zweiten Komponente (120) und
einem Slider-Klapp-Mechanismus (150), wobei der Slider-Klapp-Mechanismus ein Schiebeelement aufweist und das Schiebeelement eine Oberfläche zum Tragen einer dritten Komponente aufweist,
wobei die erste Komponente (110) mit einer Aussparung (156) konfiguriert ist, die eine Rinne festlegt, um das Schiebeelement (154) in einer C-Rinnen-Konfiguration aufzunehmen,
wobei der Slider-Klapp-Mechanismus (150) dazu konfiguriert ist, in Betrieb die erste Komponente (110) an die zweiten Komponente (120) zu koppeln,
wobei der Slider-Klapp-Mechanismus (150) dazu konfiguriert ist, das Schiebeelement in der Rinne (156) zu schieben und die zweite Komponente (120) relativ zur ersten Komponente (110) von einer Einschiebposition (101) zu einer Herausschiebposition (102) zu bewegen,
wobei in der Einschiebposition die Oberfläche nicht exponiert ist,
wobei in der Einschiebposition der Slider-Klapp-Mechanismus im Wesentlichen in die Aussparung eingefügt ist und
wobei der Slider-Klapp-Mechanismus (150) dazu konfiguriert ist, in der Einschiebposition (101) oder in der Herausschiebposition (102) die zweite Komponente (120) relativ zur ersten Komponente (110) von einer zugeklappten Position (103) in eine aufgeklappte Position (104) zu klappen.

2. Mobilvorrichtung (100) nach Anspruch 1, wobei die erste Komponente (110) mit einer Vielzahl an Tasten (160) konfiguriert ist und eine oder mehrere der Vielzahl an Tasten (160) in der Herausschiebposition (102) zugänglich sind und eine oder mehrere Steuerungstasten zum Bedienen der Mobilvorrichtung aufweist.

3. Mobilvorrichtung (100) nach Anspruch 1 oder 2, wobei die zweite Komponente (120) eine Anzeige (122) aufweist, und die Anzeige (122) in der aufgeklappten Position (104) sichtbar ist.

4. Mobilvorrichtung (100) nach Anspruch 3, wobei die Anzeige (122) konfiguriert ist, betriebsbereit zu sein, wenn der Slider-Klapp-Mechanismus (150) in der aufgeklappten Position (104) ist.

5. Mobilvorrichtung (100) nach einem der vorhergehenden Ansprüche, wobei der Slider-Klapp-Mechanismus (150) ein Gelenk (152) und ein Schiebeelement (154) aufweist, das in Betrieb an das Gelenk (152) gekoppelt ist.

6. Mobilvorrichtung (100) nach Anspruch 5, wobei das Gelenk (152) ein Gelenkelement (161), das mit der zweiten Komponente (120) verbunden ist, und ein weiteres Gelenkelement (162), das mit einem Ende des Schiebeelements (154) verbunden ist, und einen Gelenkstift (163) aufweist, der in Betrieb die Gelenkelemente (161, 162) zusammenkoppelt.

7. Mobilvorrichtung (100) nach Anspruch 5 oder 6, wobei sich das Gelenk (152) mit der zweiten Komponente (120) in Eingriff befindet.

8. Mobilvorrichtung (100) nach einem der vorhergehenden Ansprüche, wobei das Schiebeelement (154) eine elektronische Komponente (158) aufweist, die eine Kamerakomponente oder eine Navigationskomponente oder zusätzliche Tasten aufweist.

9. Mobilvorrichtung (100) nach Anspruch 8, wobei die elektronische Komponente (158) eine Kamerakomponente aufweist, und die Kamerakomponente (158) in einem verdecken Zustand ist, wenn der Slider-Klapp-Mechanismus (150) in der Einschiebposition (101) ist.

10. Mobilvorrichtung (100) nach Anspruch 9, wobei die Kamerakomponente (158) betriebsbereit ist, wenn der Slider-Klapp-Mechanismus (150) in der Herausschieb- (102) und der aufgeklappten Position (104) ist.

11. Mobilvorrichtung (100) nach Anspruch 8, wobei in der Einschiebposition der Slider-Klapp-Mechanismus im Wesentlichen in der Aussparung enthalten ist, so dass die elektronische Komponente vor Exponierung geschützt ist.

## Revendications

1. Dispositif mobile (100) comprenant :
un premier composant (110) ;
un deuxième composant (120) ; et
un mécanisme de bascule à coulisse (150), le mécanisme de bascule à coulisse comprenant un élément de coulisse et l'élément de coulisse ayant une surface pour porter un troisième composant ;
dans lequel ledit premier composant (110) est configuré avec un évidement (156) définissant un canal pour recevoir ledit élément de coulisse (154) selon une configuration de canal en C;
dans lequel ledit mécanisme de bascule à coulisse (150) est configuré pour coupler de manière opérationnelle ledit premier composant (110) audit deuxième composant (120) ;
dans lequel ledit mécanisme de bascule à coulisse (150) est configuré pour faire coulisser les éléments de coulisse dans ledit canal (156) et déplacer le deuxième composant (120) par rapport audit premier composant (110) d'une position de coulissement vers l'intérieur (100) à une position de coulissement vers l'extérieur (102) ;
dans lequel, dans ladite position de coulissement vers l'intérieur, ladite surface n'est pas exposée ; et
dans lequel, dans ladite position de coulissement vers l'intérieur, ledit mécanisme de bascule à coulisse est sensiblement inséré dans ledit évidement, et
dans lequel, ledit mécanisme de bascule à coulisse (150) est configuré pour faire basculer ledit deuxième composant (120) par rapport audit premier composant (110) d'une position fermée rabattue (103) à une position ouverte rabattue (104) dans ladite position de coulissement vers l'intérieur (101) ou dans ladite position de coulissement vers l'extérieur (102).

2. Dispositif mobile (100) selon la revendication 1, dans lequel ledit premier composant (110) est configuré avec une pluralité de touches (160), et une ou plusieurs de ladite pluralité de touches (160) sont accessibles dans ladite position de coulissement vers l'extérieur (102) et comprennent une ou plusieurs touches de commande pour actionner le dispositif mobile.

3. Dispositif mobile (100) selon la revendication 1 ou la revendication 2, dans lequel ledit deuxième composant (120) comprend un écran (122) et ledit écran (122) est visible dans ladite position ouverte rabattue (104).

4. Dispositif mobile (100) selon la revendication 3, dans lequel ledit écran (122) est configuré pour être opérationnel lorsque ledit mécanisme de bascule à coulisse (150) est dans ladite position ouverte rabattue (104).

5. Dispositif mobile (100) selon l'une quelconque des revendications précédentes, dans lequel ledit mécanisme de bascule à coulisse (150) comprend une charnière (152) et un élément de coulisse (154) couplé de manière opérationnelle à ladite charnière (152).

6. Dispositif mobile (100) selon la revendication 5, dans lequel ladite charnière (152) comprend un élément de charnière (161) raccordé audit deuxième composant (120) et un autre élément de charnière (162) raccordé à une extrémité dudit élément de coulisse (154), et une broche de charnière (163) couplant de manière opérationnelle lesdits éléments de charnière (161,162) ensemble.

7. Dispositif mobile (100) selon l'une quelconque des revendications 5 à 6, dans lequel ladite charnière (152) met en prise le deuxième composant (120).

8. Dispositif mobile (100) selon l'une quelconque des revendications précédentes, dans lequel ledit élément de coulisse (154) comprend un composant électronique (158) comprenant le composant d'appareil photo, ou un composant de navigation ou des touches supplémentaires.

9. Dispositif mobile (100) selon la revendication 8, dans lequel le composant électronique (158) comprend un composant d'appareil photo et ledit composant d'appareil photo (158) est dans un état couvert lorsque ledit mécanisme de bascule à coulisse (150) est dans ladite position de coulissement vers l'intérieur (101).

10. Dispositif mobile (100) selon la revendication 9, dans lequel ledit composant d'appareil photo (158) est opérationnel lorsque ledit mécanisme de bascule à coulisse (150) est dans ladite position de coulissement vers l'extérieur (102) et dans ladite position ouverte rabattue (104).

11. Dispositif mobile (100) selon la revendication 8, dans lequel, dans ladite position de coulissement vers l'intérieur, ledit mécanisme de bascule à coulisse est sensiblement contenu dans ledit évidement de sorte que ledit composant électronique est protégé contre l'exposition.
